# FASCICULE DE BREVET EUROPEEN

(11) **EP 2 228 251 B1**
(45) Date de publication et mention de la délivrance du brevet: **10.10.2012**
(21) Numéro de dépôt: 10290119.6
(22) Date de dépôt: 10.03.2010
(51) Int. Cl.: B62D 1/18, B60N 2/50, B60N 2/16

(54) **Poste de pilotage de véhicule ayant une structure élévatrice du siège du pilote et des moyens d'orientation du volant comprenant un quadrilatère déformable.**
Cockpit eines Fahrzeugs, das über eine Struktur zur Höhenverstellung des Pilotensitzes und Mittel zur Lenkradverstellung einschließlich eines deformierbaren Vierecks verfügt
Vehicle driving seat with a structure for raising the seat of the driver and means for positioning the steering wheel including a deformable quadrilateral

(30) Priorité: 13.03.2009 FR 0901223
(43) Date de publication de la demande: 15.09.2010
(73) Titulaire: NEXTER Systems, 42328 Roanne Cedex (FR)
(72) Inventeur: Bertrand, Ludovic, 18023 Bourges Cedex (FR)
(74) Mandataire: Célanie, Christian

(56) Documents cités:
- EP-A- 1 361 104
- DE-A1- 2 307 183
- FR-A- 2 450 733

## Description

Le domaine technique de l'invention est celui des postes de pilotage pour un véhicule dans lequel le siège du pilote est solidaire d'une structure élévatrice.

De tels postes de pilotage sont en particulier mis en oeuvre dans les véhicules blindés car ils permettent au pilote d'avoir au moins deux positions de pilotage, une position tête sortie hors de l'habitacle du véhicule et une position à l'abri à l'intérieur du véhicule.

Le brevet EP-1361104 décrit un tel poste de pilotage dans lequel le siège est solidaire d'un bras monté pivotant sur la caisse du véhicule. Afin de conserver une certaine ergonomie pour le pilotage dans les deux positions extrêmes du siège, le volant est fixé à un support qui est lui aussi monté pivotant sur une articulation solidaire de la caisse.

Une biellette d'entraînement fait pivoter le support de volant lors du pivotement du bras. Ainsi, lorsque le pilote adopte une position de conduite tête sortie, l'orientation angulaire du volant se rapproche de l'horizontale et on évite ainsi de coincer le pilote avec le volant.

Un tel poste de pilotage présente des inconvénients. En effet l'amplitude de déplacement en hauteur du siège est relativement réduite. Si on cherche à accroître cette amplitude, l'inclinaison du siège devient excessive ce qui nuit au confort de conduite.

Pour accroître la course sans incliner le siège on a donc cherché à remplacer un tel bras pivotant par une nacelle montée sur un quadrilatère déformable. Cependant il n'est plus possible alors de mettre en oeuvre un support de volant pivotant par rapport à la caisse car le pivotement de ce support présente un point de rebroussement qui conduit à des interférences entre le volant et le pilote. On entend par point de rebroussement un changement du sens de pivotement du volant lors du déplacement de la nacelle.

L'invention a pour but de proposer un poste de pilotage permettant de fournir une course verticale importante pour le pilote tout en assurant une ergonomie de conduite dans toutes les positions du poste.

Par ailleurs l'invention permet d'assurer l'orientation du volant par des moyens géométriques simples et robustes qui ne mettent en oeuvre que des articulations.

Ainsi, l'invention a pour objet un poste de pilotage d'un véhicule dans lequel le siège du pilote est solidaire d'une structure élévatrice qui est mobile par rapport à la caisse du véhicule par l'action d'un moyen moteur entre une position basse dans laquelle le pilote est complètement à l'intérieur du véhicule et une position haute dans laquelle le pilote est tête sortie, poste de pilotage comprenant un volant dont l'orientation spatiale est modifiée par des moyens d'orientation lorsque la structure élévatrice est déplacée, poste de pilotage **caractérisé en ce que** la structure élévatrice comprend une nacelle solidaire d'un premier quadrilatère déformable comprenant au moins deux bras articulés d'une part sur la nacelle et d'autre part sur la caisse, le volant étant lui-même solidaire de moyens d'orientation qui comprennent un deuxième quadrilatère déformable comprenant une bielle inférieure et une bielle supérieure qui sont articulées sur un support de volant, la bielle inférieure étant par ailleurs articulée sur la nacelle et la bielle supérieure du deuxième quadrilatère déformable étant entraînée par des moyens de commande de pivotement qui sont constitués par un troisième quadrilatère déformable comprenant au moins deux barres articulées, d'une part sur la caisse et d'autre part sur ladite bielle supérieure, la déformation du troisième quadrilatère étant commandée par la déformation du premier quadrilatère au travers d'un moyen de liaison.

Selon un mode particulier de réalisation, le troisième quadrilatère déformable aura sa barre inférieure qui constituera par ailleurs le bras supérieur du premier quadrilatère déformable et jouera ainsi le rôle de moyen de liaison.

Le bras supérieur du premier quadrilatère déformable pourra comporter une branche sur laquelle sera fixée une articulation recevant la bielle supérieure du deuxième quadrilatère déformable.

Selon un autre mode de réalisation, le troisième quadrilatère déformable aura une barre qui sera reliée au premier quadrilatère déformable ou à la nacelle par une biellette qui constituera le moyen de liaison.

La biellette pourra être articulée entre la barre inférieure du troisième quadrilatère déformable et le bras inférieur du premier quadrilatère déformable.

La biellette pourra être articulée entre la barre inférieure du troisième quadrilatère déformable et la nacelle.

La bielle supérieure du deuxième quadrilatère déformable pourra comporter un prolongement sur lequel sera fixée une articulation recevant la barre supérieure du troisième quadrilatère déformable.

Le moyen moteur pourra comprendre un vérin qui sera fixé entre une articulation solidaire de la caisse et une articulation solidaire d'un bras du premier parallélogramme déformable.

Le moyen moteur pourra comprendre un vérin qui sera fixé entre une articulation solidaire de la caisse et une articulation solidaire de la nacelle. L'invention sera mieux comprise à la lecture de la description qui va suivre de modes particuliers de réalisation, description faite en référence aux dessins annexés et dans lesquels :
- la figure 1 est une vue latérale schématique d'une caisse de véhicule équipée d'un poste de pilotage selon un mode de réalisation de l'invention,
- les figures 2a et 2b montrent le poste de pilotage respectivement dans ses positions basse et haute,
- la figure 3 montre une variante de réalisation de l'invention,
- la figure 4 montre une autre variante de réalisation de l'invention.

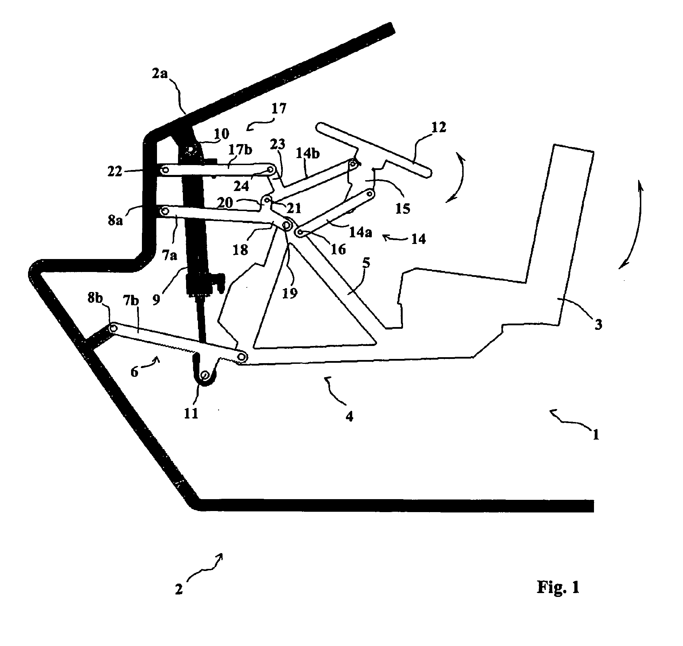

La figure 1 montre un poste de pilotage 1 d'un véhicule 2 dans lequel le siège 3 du pilote est solidaire d'une structure élévatrice 4 qui est mobile par rapport à la caisse 2a du véhicule.

Cette structure élévatrice 4 comprend une nacelle 5 qui est solidaire d'un premier quadrilatère déformable 6 comprenant au moins deux bras 7a et 7b articulés, d'une part sur la nacelle 5, et d'autre part sur la caisse 2a au niveau de deux articulations 8a et 8b.

La figure représentée ici est bien entendu très schématique. La nacelle 5 pourra en particulier être supportée par deux paires de bras 7a,7b articulés sur la caisse par deux paires d'articulations 8a, 8b.

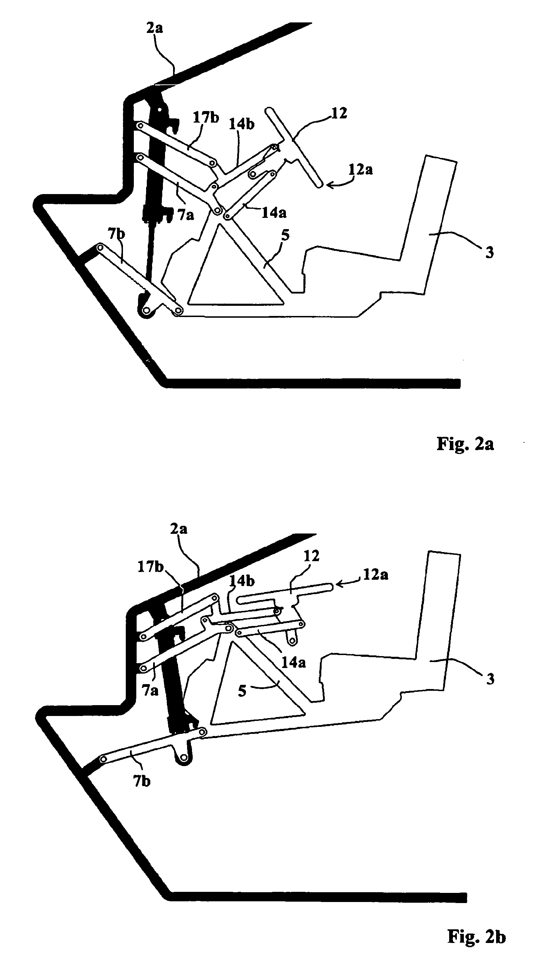

La nacelle 5 est déplacée de sa position basse (figure 2a) à sa position haute (figure 2b) à l'aide d'un moyen moteur 9 qui est constitué par un vérin (électrique ou hydraulique).

Dans la position basse (figure 2a) de la nacelle 5, le pilote se trouve complètement à l'intérieur du véhicule 2. Dans la position haute (figure 2b) de la nacelle, le pilote a sa tête sortie au travers d'une ouverture (non représentée).

Le vérin 9 est monté entre une articulation 10 fixée à la caisse 2a et une autre articulation 11 solidaire du bras inférieur 7b du premier quadrilatère déformable 6. Au lieu d'être fixé à la barre inférieure 7b, le vérin pourrait être fixé à la barre supérieure 7a ou bien directement sur la nacelle 5, cela en fonction des contraintes d'intégration dans le véhicule.

On remarque sur les figures 2a et 2b que le recours à un quadrilatère déformable 6 permet de donner à la nacelle 5 portant le siège 3 une trajectoire dans laquelle le siège 3 ne pivote pratiquement pas par rapport à un plan horizontal. D'une façon classique, le mouvement sera une translation circulaire (sans rotation du siège) lorsque le quadrilatère déformable 6 est un parallélogramme (longueurs des bras identiques deux à deux et parallèles). Une légère rotation spatiale du siège interviendra lorsque le quadrilatère déformable 6 n'est pas un parallélogramme (au moins deux bras non parallèles). L'Homme du Métier définira les longueurs des bras du premier quadrilatère déformable 6 en fonction de la trajectoire souhaitée et des contraintes d'intégration de la nacelle 5 dans le véhicule.

Le poste de pilotage 1 comprend par ailleurs un volant 12 dont l'orientation spatiale est modifiée par des moyens d'orientation lorsque la structure élévatrice 4 est déplacée. Les moyens d'orientation du volant comprennent un deuxième quadrilatère déformable 14 formé d'une bielle inférieure 14a et d'une bielle supérieure 14b qui sont articulées sur un support 15 du volant 12.

Bien entendu le volant 12, qui est monté pivotant par rapport au support 15, est raccordé à un mécanisme de direction qui ne fait pas partie de la présente invention et qui n'est donc pas représenté ici. Ce mécanisme comprendra des tiges de liaison coulissantes et des joints de type CARDAN pour accompagner le déplacement de la nacelle 5.

La bielle inférieure 14a du deuxième quadrilatère déformable est par ailleurs articulée sur la nacelle 5 au niveau d'une articulation 16 et la bielle supérieure 14b du deuxième quadrilatère déformable 14 est entraînée par des moyens de commande de pivotement qui sont constitués par un troisième quadrilatère déformable 17.

Ce troisième quadrilatère déformable 17 comprend au moins deux barres qui sont articulées d'une part sur la caisse 2a et d'autre part sur la bielle supérieure 14b du deuxième quadrilatère déformable.

Suivant le mode particulier de réalisation qui est représenté ici, la barre inférieure du troisième quadrilatère 17 est constituée par le bras supérieur 7a du premier quadrilatère déformable 6, bras qui est fixé à la caisse 2a au niveau de l'articulation 8a. Ce bras supérieur 7a joue ainsi le rôle de moyen de liaison commandant la déformation du troisième quadrilatère en liaison avec la déformation du premier quadrilatère (donc avec le déplacement de la nacelle).

Ce bras supérieur 7a a alors une forme particulière en Y et comporte une branche inférieure 18 qui porte l'articulation 19 assurant la liaison avec la nacelle 5.

Le bras supérieur 7a comporte également une branche supérieure 20 sur laquelle est fixée une articulation 21 qui est solidaire de la bielle supérieure 14b du deuxième quadrilatère déformable 14.

La barre supérieure 17b du troisième quadrilatère 17 est fixée à la caisse 2a du véhicule par une articulation 22. Cette barre supérieure 17b est à son autre extrémité articulée sur la bielle supérieure 14b du deuxième quadrilatère déformable 14.

Cette bielle supérieure 14b a donc une forme particulière et comporte un prolongement latéral 23 sur lequel est disposée une articulation 24 recevant la barre supérieure 17b.

Ainsi, si on considère le deuxième quadrilatère déformable 14 qui porte le volant 12, la bielle supérieure 14b forme dans toutes les positions de la nacelle un moyen de maintien stable pour le volant, la présence des deux articulations 24 et 21 assurant la rigidité (car l'articulation 21 est reliée à la nacelle 5).

L'Homme du Métier choisira les longueurs des différentes barres et bielles des deuxième 14 et troisième 17 quadrilatères déformables (et notamment les longueurs de la branche 20 du bras 7a et du prolongement 23 de la bielle 14b) en fonction du mouvement souhaité pour le support de volant 15.

Ainsi une modification de la longueur de la branche 20 permet de modifier la distance entre les articulations 19 et 21 ce qui évite un repli excessif et un blocage du deuxième quadrilatère déformable 14 (voir la figure 2b).

Par ailleurs l'amplitude et la cinématique du pivotement du support de volant 15 est ajustable en jouant sur la localisation de l'articulation 22 de la barre supérieure 17b du troisième quadrilatère déformable 17 ainsi que sur la longueur du prolongement 23 de la bielle 14b. En effet ce mouvement de pivotement dépend de la distance entre les articulations 21 et 24.

On notera que la présence d'un troisième quadrilatère déformable 17 permet d'éviter tout point de rebroussement dans le mouvement du support 15 de volant et ce malgré la course verticale importante de la nacelle 5.

Il est ainsi possible d'obtenir un mouvement du support de volant tel que le volant passe de sa position inclinée (figure 2a) à une position pratiquement horizontale (figure 2b) sans que le bord inférieur 12a du volant ne se rapproche du pilote.

L'articulation 22 doit être située sur une droite perpendiculaire au segment limité par les deux positions extrêmes souhaitées pour l'articulation 24 et passant par le milieu de ce segment (médiatrice du segment). La position de l'articulation 22 sur cette droite est ensuite dictée par les contraintes d'intégration (formes du véhicule 2 en particulier) et l'espace minimal toléré entre la partie arrière du volant 12 et le dossier du siège 3. Concrètement on placera l'articulation 22 de telle sorte que la barre supérieure 17b soit la plus longue possible. En effet on limite ainsi le rapprochement du volant et du siège lors du déplacement de la nacelle 5.

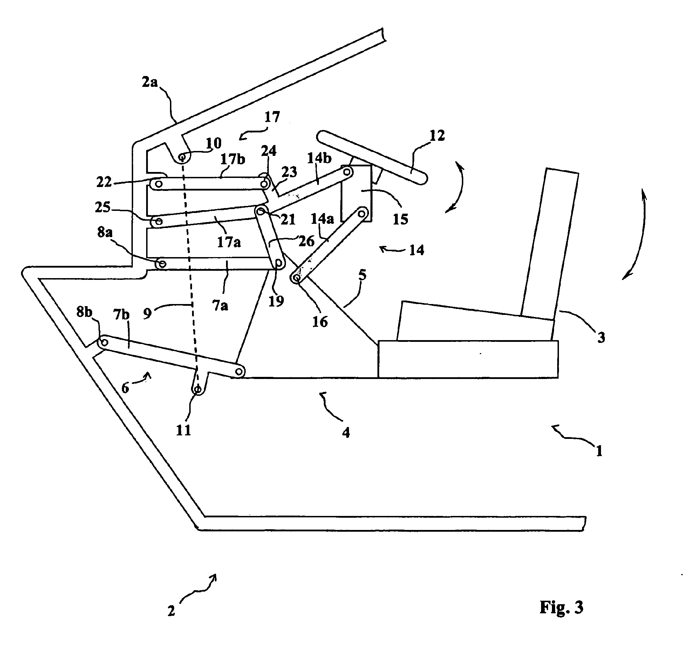

La figure 3 schématise un autre mode de réalisation de l'invention dans lequel le troisième quadrilatère déformable 17 comporte une barre inférieure 17a qui est indépendante du premier quadrilatère déformable 6.

Cette barre inférieure 17a est fixée à la caisse 2a du véhicule par une articulation 25 et elle est reliée à la bielle supérieure 14b du deuxième quadrilatère déformable 14 au niveau de l'articulation 21.

Là encore la bielle supérieure 14b a une forme particulière comportant un prolongement latéral 23 sur lequel est disposée l'articulation 24 qui reçoit la barre supérieure 17b du troisième quadrilatère.

Pour la clarté du dessin on a représenté sur cette figure le vérin 9 par une ligne en pointillés.

Ce mode de réalisation permet de définir un moyen de commande de pivotement formé par un troisième quadrilatère 17 spécifique et complètement indépendant de la géométrie du premier quadrilatère 6. La déformation de ce troisième quadrilatère 17 est alors commandée par un moyen de liaison spécifique qui est constitué par une biellette 26 le reliant au premier quadrilatère 6. Cette biellette 26 est ici disposée entre les articulations 19 et 21.

Il est alors possible d'adapter l'invention à une configuration d'habitacle de véhicule particulière.

La biellette 26 pourrait être disposée entre n'importe quel point du premier quadrilatère 6 et n'importe quel point du troisième quadrilatère 17 (ou de la nacelle 5). Entre des articulations situées sur des sommets de l'un et de l'autre quadrilatère ou bien entre des articulations situées sur des barres / bras des deux quadrilatères.

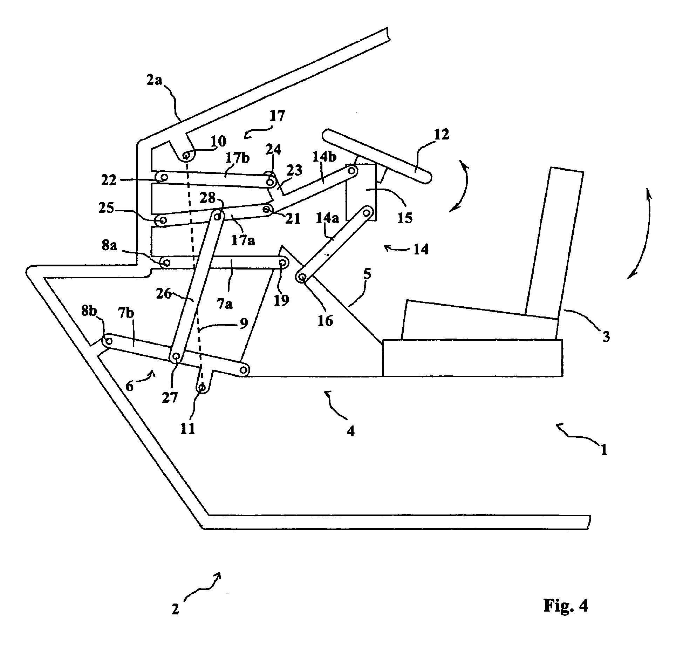

A titre d'exemple la figure 4 montre une configuration dans laquelle la biellette 26 est disposée entre une articulation 27 portée par le bras 7b et une articulation 28 portée par la barre 17a. La localisation et le montage de la biellette 26 dépendra de la configuration de l'habitacle du véhicule et des contraintes d'intégration.

## Revendications

1. Poste de pilotage (1) d'un véhicule (2) dans lequel le siège du pilote est solidaire d'une structure élévatrice (4) qui est mobile par rapport à la caisse du véhicule par l'action d'un moyen moteur (9) entre une position basse dans laquelle le pilote est complètement à l'intérieur du véhicule et une position haute dans laquelle le pilote est tête sortie, poste de pilotage comprenant un volant (12) dont l'orientation spatiale est modifiée par des moyens d'orientation (14) lorsque la structure élévatrice est déplacée, poste de pilotage **caractérisé en ce que** la structure élévatrice (4) comprend une nacelle (5) solidaire d'un premier quadrilatère déformable (6) comprenant au moins deux bras (7a, 7b) articulés d'une part sur la nacelle (5) et d'autre part sur la caisse (2a), le volant (12) étant lui-même solidaire de moyens d'orientation qui comprennent un deuxième quadrilatère déformable (14) comprenant une bielle inférieure (14a) et une bielle supérieure (14b) qui sont articulées sur un support (15) de volant, la bielle inférieure (14a) étant par ailleurs articulée sur la nacelle (5) et la bielle supérieure (14b) du deuxième quadrilatère déformable étant entraînée par des moyens de commande de pivotement qui sont constitués par un troisième quadrilatère déformable (17) comprenant au moins deux barres articulées, d'une part sur la caisse (2a) et d'autre part sur ladite bielle supérieure (14b), la déformation du troisième quadrilatère étant commandée par la déformation du premier quadrilatère (6) au travers d'un moyen de liaison (7a, 26).

2. Poste de pilotage selon la revendication 1, **caractérisé en ce que** le troisième quadrilatère déformable (17) a sa barre inférieure qui constitue par ailleurs le bras supérieur (7a) du premier quadrilatère déformable et joue ainsi le rôle de moyen de liaison.

3. Poste de pilotage selon la revendication 2, **caractérisé en ce que** le bras supérieur (7a) du premier quadrilatère déformable (6) comporte une branche (20) sur laquelle est fixée une articulation (21) recevant la bielle supérieure (14b) du deuxième quadrilatère déformable (14).

4. Poste de pilotage selon la revendication 1, **caractérisé en ce que** le troisième quadrilatère déformable (17) a une barre (17a) qui est reliée au premier quadrilatère déformable (6) ou à la nacelle (5) par une biellette (26) qui constitue le moyen de liaison.

5. Poste de pilotage selon la revendication 4, **caractérisé en ce que** la biellette (26) est articulée entre la barre inférieure (17a) du troisième quadrilatère déformable (17) et le bras inférieur (7b) du premier quadrilatère déformable (6).

6. Poste de pilotage selon la revendication 4, **caractérisé en ce que** la biellette (26) est articulée entre la barre inférieure (17a) du troisième quadrilatère déformable (17) et la nacelle (5).

7. Poste de pilotage selon une des revendications 1 à 6, **caractérisé en ce que** la bielle supérieure (14b) du deuxième quadrilatère déformable (14) comporte un prolongement (23) sur lequel est fixée une articulation (24) recevant la barre supérieure (17b) du troisième quadrilatère déformable (17).

8. Poste de pilotage selon une des revendications 1 à 7, **caractérisé en ce que** le moyen moteur comprend un vérin (9) qui est fixé entre une articulation (10) solidaire de la caisse (2a) et une articulation (11) solidaire d'un bras (7b) du premier parallélogramme déformable (6).

9. Poste de pilotage selon une des revendications 1 à 7, **caractérisé en ce que** le moyen moteur comprend un vérin (9) qui est fixé entre une articulation (10) solidaire de la caisse et une articulation solidaire de la nacelle (5).

## Claims

1. A driving post (1) for a vehicle (2) in which the driver's seat is integral with an elevating structure (4) mobile with respect to the vehicle body through the action of motors means (9) between a low position in which the driver is fully inside the vehicle and a high position in which the driver's head is out of the vehicle, driving post comprising a steering wheel (12) whose spatial orientation is modified by orientation means (14) when the elevating structure is displaced, driving post ***wherein*** the elevating structure (4) comprises a pod (5) integral with a first deformable quadrilateral (6) comprising at least two arms (7a, 7b) articulated on the pod (5) and on the vehicle body (2a), the steering wheel (12) itself being integral with deformable orientation means comprising a second deformable quadrilateral (14) comprising a lower connecting rod (14a) and an upper connecting rod (14b) articulated on a steering wheel support (15), the lower connecting rod (14a) being additionally connected to the pod (5) and the upper connecting rod (14b) of the second deformable quadrilateral being driven by pivoting control means constituted by a third deformable quadrilateral (17) comprising at least two articulated bars, firstly on the vehicle body (2a) and secondly on the upper connecting rod (14b), the deformation of the third quadrilateral being controlled by the deformation of the first quadrilateral (6) via linking means (7a, 26).

2. A driving post according to Claim 1, wherein the third deformable quadrilateral (17) has a lower bar that also constitutes the upper arm (7a) of the first deformable quadrilateral thus acting as linking means.

3. A driving post according to Claim 2, wherein the upper arm (7a) of the first deformable quadrilateral (6) incorporates a branch (20) onto which an articulation (21) is fixed to receive the upper connecting rod (14b) of the second deformable quadrilateral (14).

4. A driving post according to Claim 1, wherein the third deformable quadrilateral (17) has a bar (17a) that is linked to the first deformable quadrilateral (6) or to the pod (5) by a connecting rod (26) that constitutes the linking means.

5. A driving post according to Claim 4, wherein the connecting rod (26) is articulated between the lower bar (17a) of the third deformable quadrilateral (17) and the lower arm (7b) of the first deformable quadrilateral (6).

6. A driving post according to Claim 4, wherein the connecting rod (26) is articulated between the lower bar (17a) of the third deformable quadrilateral (17) and the pod (5).

7. A driving post according to one of Claims 1 to 6, wherein the upper connecting rod (14b) of the second deformable quadrilateral (14) incorporates an extension (23) onto which an articulation (24) is fixed to receive the upper bar (17b) of the third deformable quadrilateral (17).

8. A driving post according to one of Claims 1 to 7, wherein the motor means comprise a cylinder (9) that is fastened between an articulation (10) integral with the vehicle body (2a) and an articulation (11) integral with the arm (7b) of the first deformable parallelogram (6).

9. A driving post according to one of Claims 1 to 7, wherein the motor means comprise a cylinder (9) that is fastened between an articulation (10) integral with the vehicle body and an articulation integral with the pod (5).

## Patentansprüche

1. Steuerstand (1) eines Fahrzeugs (2), bei dem der Sitz des Fahrers fest mit einer Hebe- und Senkstruktur (4) verbunden ist, welche in Bezug auf die Karosserie des Fahrzeugs durch die Einwirkung eines Antriebsmittels (9) zwischen einer niedrigen Position, in welcher sich der Fahrer vollständig im Inneren des Fahrzeugs befindet, und einer hohen Position, in welcher der Kopf des Fahrers herausragt, beweglich ist, wobei der Steuerstand ein Lenkrad (12) umfasst, dessen räumliche Ausrichtung durch Ausrichtungsmittel (14) verändert wird, wenn die Hebe- und Senkstruktur verschoben wird, wobei der Steuerstand **dadurch gekennzeichnet *ist,* dass** die Hebe- und Senkstruktur (4) ein fest mit einem ersten, verformbaren Viereck (6) verbundenes Gestell (5) umfasst, welches wenigstens zwei einerseits an das Gestell (5) und andererseits an die Karosserie (2a) angelenkte Arme (7a, 7b) umfasst, wobei das Lenkrad (12) selbst fest mit Ausrichtungsmitteln verbunden ist, welche ein zweites, verformbares Viereck (14) umfassen, welches eine untere Stange (14a) und eine obere Stange (14b) umfasst, die an einen Lenkradträger (15) angelenkt sind, wobei die untere Stange (14a) außerdem am Gestell (5) angelenkt ist und die obere Stange (14b) des zweiten, verformbaren Vierecks von Schwenksteuermitteln mitgenommen wird, welche von einem dritten, verformbaren Viereck (17) gebildet werden, welches wenigstens zwei, einerseits an der Karosserie (2a) und andererseits an der genannten oberen Stange (14b) angelenkte Stäbe umfasst, wobei die Verformung des dritten Vierecks durch die Verformung des ersten Vierecks (6) mittels eines Verbindungsmittels (7a, 26) gesteuert wird.

2. Steuerstand nach Anspruch 1, **dadurch gekennzeichnet, dass** das dritte, verformbare Viereck (17) seinen unteren Stab besitzt, welcher darüber hinaus den oberen Arm (7a) des ersten, verformbaren Vierecks bildet und so die Rolle als Verbindungsmittel spielt.

3. Steuerstand nach Anspruch 2, **dadurch gekennzeichnet, dass** der obere Arm (7a) des ersten, verformbaren Vierecks (6) einen Zweig (20) umfasst, an dem ein Gelenk (21) befestigt ist, welches die obere Stange (14b) des zweiten, verformbaren Vierecks (14) aufnimmt.

4. Steuerstand nach Anspruch 1, **dadurch gekennzeichnet, dass** das dritte, verformbare Viereck (17) einen Stab (17a) besitzt, der mit dem ersten, verformbaren Viereck (6) oder mit dem Gestell (5) über einen Schwingarm (26) verbunden ist, welcher das Verbindungsmittel bildet.

5. Steuerstand nach Anspruch 4, **dadurch gekennzeichnet, dass** der Schwingarm (26) zwischen dem unteren Stab (17a) des dritten, verformbaren Vierecks (17) und dem unteren Arm (7b) des ersten, verformbaren Vierecks (6) angelenkt ist.

6. Steuerstand nach Anspruch 4, **dadurch gekennzeichnet, dass** der Schwingarm (26) zwischen dem unteren Stab (17a) des dritten, verformbaren Vierecks (17) und dem Gestell (5) angelenkt ist.

7. Steuerstand nach einem der Ansprüche 1 bis 6, **dadurch gekennzeichnet, dass** die obere Stange (14b) des zweiten, verformbaren Vierecks (14) eine Verlängerung (23) umfasst, an der ein Gelenk (24) befestigt ist, welches den oberen Stab (17b) des dritten, verformbaren Vierecks (17) aufnimmt.

8. Steuerstand nach einem der Ansprüche 1 bis 7, **dadurch gekennzeichnet, dass** das Antriebsmittel einen Zylinder (9) umfasst, der zwischen einem fest mit der Karosserie (2a) verbundenen Gelenk (10) und einem fest mit einem Arm (7b) des ersten, verformbaren Parallelogramms (6) verbundenen Gelenk (11) befestigt ist.

9. Steuerstand nach einem der Ansprüche 1 bis 7, **dadurch gekennzeichnet, dass** das Antriebsmittel einen Zylinder (9) umfasst, der zwischen einem fest mit der Karosserie verbundenen Gelenk (10) und einem fest mit dem Gestell (5) verbundenen Gelenk befestigt ist.
